# EUROPEAN PATENT SPECIFICATION

(11) **EP 2 881 699 B1**
(45) Date of publication and mention of the grant of the patent: **18.04.2018**
(21) Application number: 14003962.9
(22) Date of filing: 25.11.2014
(51) Int. Cl.: G01B 5/00

(54) **System for compensating dynamic and thermal deformity errors of a linear motion single-plane gantry stage in real time**
System zur Echtzeitkompensation thermischer und dynamischer Deformationsfehler einer in einer Ebene abgewickelten Einzelebenen-Gantry-Stufe mit linearer Bewegung
Système de compensation en temps réel des erreurs de déformation thermique et dynamique d'un étage de portique à plan unique et mouvement linéaire

(30) Priority: 04.12.2013 KR 20130150059
(43) Date of publication of application: 10.06.2015
(73) Proprietor: Soonhan Engineering Corp., Seongnam City, Gyeonggi-do (KR)
(72) Inventor: Seo, Jong Kyu, Seongnam City (KR); Shin, Soo Keun, Seongnam City (KR); Jung, Chul, Seongnam City (KR); Kwon, Yong Uk, Seongnam City (KR); Ko, Byoung Gwan, Seongnam City (KR); Rahul, Banik, Seongnam City (KR)
(74) Representative: Hofmann, Ernst

(56) References cited:
- US-A- 5 333 386
- US-A1- 2009 326 849
- US-A1- 2010 066 298
- US-A1- 2011 061 441
- US-A1- 2012 105 866

## Description

### TECHNICAL FIELD

The present application relates to a system for compensating dynamic and thermal deformity errors of a linear motion single-plane gantry stage in real time, a stage apparatus, manufacturing thereof, and measuring and inspection equipment, and more particularly to a system for compensating dynamic and thermal deformity errors of a linear motion single-plane gantry stage in real time, which measures a linearity and a yaw error due to motions of the linear motion single-plane gantry stage and a thermal deformity error so as to control the real-time compensation for the measured linearity, yaw and thermal deformity errors, and to a stage apparatus applying the system and manufacture thereof, and to measuring and inspection equipment therefore.

US 2010/066298 A1 discloses a positioning device in gantry type. Due to a special arrangement of the position-measuring devices used for the positioning, errors due to thermal expansion of the positioning device may be avoided to a great extent. In particular, attention is given to the advantageous placement of fixed point of a scale relative to a straightness track of a further scale.

From US 2011/061441 A1 a gantry stage orthogonality error measurement method and error compensation method for homing processing is known which includes: decoding and storing an encoder value of a current position of the Gantry stage that structurally matches an orthogonality; monitoring at least one of (a) sensors for homing processing and (b) encoder index signals respectively set on a master axis and a slave axis of the Gantry stage while the Gantry stage is driven at low speed; and in the event that the index signal is detected, decoding a linear encoder value of at least one of (a) the master axis and (b) slave axis.

US 2012/105866 A1 discloses a coordinate measuring machine for determination of at least one spatial coordinate of a measurement point on an object to be measured. The coordinate measuring machine comprises a stationary base, a probe head for approaching the measurement point and a frame structure for linking the probe head to the base. A first reference path is provided by an optical reference beam, wherein the reference beam extends along a guide of a linear drive mechanism so that the reference path is parallel to a first direction.; Furthermore, at least one displacement sensor is assigned to the reference beam, the reference beam and the displacement sensor being designed and arranged in such a way, that a displacement of the movable member of the linear drive mechanism relative to the first reference path is measurable being indicative of a translational and/or rotational displacement of the movable member from its ordinary bearing position.

US 2009/326849 A1 discloses a coordinate measuring machine which compensates for hysteresis error caused by friction at the non-driven end of the bridge. The bridge may have a single drive and/or a single scale. The methods, systems, and apparatuses compensate for errors in the x-direction and/or errors in the y-direction caused by rotation of the bridge. Some embodiments compensate for hysteresis errors in the x-direction caused by a vertically-movable ram.

In US 5,333,386 a computer-operated coordinate-measurement machine is disclosed which has two length-measurement systems arranged in parallel for measuring the longitudinal displacement of a probe carried by the portal of the machine, and these two length-measurement systems may belong to different precision classes. A computer-associated device forms an absolute position-measurement value from length-measurement signals of the more precise measurement system and said device forms a dynamic measurement or instantaneous deviation value from the difference between length-measurement signals of the respective systems. The computer of the machine calculates the effective instantaneous position of the probe borne by the portal, using the instantaneous value of the transverse position of the probe on the portal, in conjunction with the absolute measurement value and the dynamic measurement value. DE 10 2008 010 284 A1 discloses a linear motion single-plane gantry stage with a plurality of two-dimensional position measuring units for measuring the position of the X- and Y-axially moving sliders.

### BACKGROUND OF THE INVENTION

A linear motion single-plane gantry stage generally known as an H-type gantry stage may be applied in the field of high-speed scanning requiring high static and dynamic accuracy.

In such a linear motion single-plane gantry stage, a dynamic error due to linearity and yaw errors and a thermal deformity error due to thermal expansion influence the determination of the position of the gantry stage resulting in degradation of the accuracy and so of the product quality.

In order to resolve such problems, various techniques have been proposed, but a real-time compensation has not been considered.

### SUMMARY OF THE INVENTION

It is an object of the present invention to provide a technology for accurately measuring dynamic and thermal deformity errors in a linear motion single-plane gantry stage so as to make a real-time compensation for them.

In order to achieve the object, an embodiment of the present invention provides a system for compensating dynamic and thermal deformity errors of a linear motion single-plane gantry stage in real time. The system includes: a first two-dimensional position measuring unit arranged in each of two linear edge beams respectively positioned in both sides of the linear motion single-plane gantry stage for measuring the position of an X-axially moving gantry beam to provide a feedback of an X-axial motion thereof; a second two-dimensional position measuring unit for measuring the position of a Y-axially moving slider moving on the X-axially moving gantry beam to provide a feedback of a Y-axial motion thereof; a thermal fixing point provided as a thermal reference for measuring a thermal expansion of the X-axially moving gantry beam; and a compensation control unit for controlling an error motion of the linear motion single-plane gantry stage in real time by measuring dynamic and thermal deformity errors based on the data received from the first and the second two-dimensional position measuring unit.

The system's first two-dimensional position measuring unit includes:
a first two-dimensional encoder scale mounted on a base below each of both ends of said X-axially moving gantry beam including a two-dimensional grid for measuring both in the motional direction and in the vertical direction;
a first motional direction encoder head arranged on a motional direction measurement grid part of said first two-dimensional encoder scale for measuring a motional direction displacement;
a first vertical direction encoder head arranged on a vertical direction measurement grid part of said first two-dimensional encoder scale for measuring a vertical direction displacement; and
an encoder mounting block for mounting said motional direction encoder head and said vertical direction encoder head on said X-axially moving gantry beam.

The system's second two-dimensional position measuring unit includes:
a second two-dimensional encoder scale mounted on each of both sides of said X-axially moving gantry beam in the Y-axial motional direction including
a two-dimensional grid for making measurement both in the motional direction and in the vertical direction;
a second motional encoder head arranged on a motional direction measurement grid part of said second two-dimensional encoder scale for measuring a motional direction displacement; and
a second vertical direction encoder head arranged on a vertical direction measurement grid part of said second two-dimensional encoder scale.

The system's second two-dimensional position measuring unit further may include a third vertical direction encoder head separated from said second vertical direction encoder head, said third vertical direction encoder head being arranged on the vertical direction measurement grid part of said second two-dimensional encoder scale for measuring a vertical direction displacement.

In the system it may be possible to measure a yaw error of said Y-axially moving slider based on the relative distance between said second vertical direction encoder head and said third vertical direction encoder head arranged on said second two-dimensional encoder scale mounted on one side of said X-axially moving gantry beam in the Y-axial motional direction.

In the system said compensation control unit performs a stage mapping for a signal received from said first motional direction encoder head so as to generate a resulting signal added to a signal received from said vertical direction encoder head, and filters the added result so as to generate a filtered result for updating an Y-axial control loop as a reference signal for a linearity error.

In the system it may be possible that the filtering is performed by a low pass filter so as to eliminate high frequency noise component, thus producing only a low frequency linearity error signal.

In the system it may be possible that said compensation control unit calculates the difference between the signal received from the second vertical direction encoder head and the signal received from the third vertical direction encoder head and filters the difference so as to generate the filtered result scaled by using a factor lg/(2 • lc) to update an X-axial control loop as a reference signal for a yaw error, said second and third vertical direction encoder heads being arranged on said second two-dimensional encoder scale mounted on one side of said X-axially moving gantry beam in the Y-axial motional direction;
said lc being the distance between the second vertical direction encoder head and the third vertical direction encoder head arranged on said second two-dimensional encoder scale mounted on one side of said X-axially moving gantry beam in the Y-axial motional direction; and
said lg being the distance between said first vertical direction encoder heads respectively arranged on said first two-dimensional encoder scale respectively mounted on the base below both ends of said X-axially moving gantry beam.

In the system it may be possible that the filtering is performed by a low pass filter so as to eliminate high frequency noise component, thus producing only a low frequency yaw error signal.

Finally it is possible that a stage apparatus uses a system for compensating dynamic and thermal deformity errors of a linear motion single-plane gantry stage in real time according to the present invention.

The above-described system does not show all the characteristics of the present invention, which is defined by the appended claims. Various characteristics of the present invention and advantages and effects thereof may be comprehended more specifically with reference to the specific embodiments described below.

There is provided a system for compensating dynamic and thermal deformity errors of a linear motion single-plane gantry stage in real time, which measures a linearity and a yaw error due to motions of the linear motion single-plane gantry stage and a thermal deformity error so as to control the real-time compensation for the measured linearity, yaw and thermal deformity errors, and to a stage apparatus applying the system.

### BRIEF DESCRIPTION OF THE DRAWINGS

Fig. 1 is a diagrammatic view of a system for compensating dynamic and thermal deformity errors of a linear motion single-plane gantry stage in real time according to an embodiment of the present invention;
Fig. 2 is a front view of a system for compensating dynamic and thermal deformity errors of a linear motion single-plane gantry stage in real time according to an embodiment of the present invention;
Fig. 3 is a view for illustrating the structure of a two-dimensional position measuring unit provided in a system for compensating dynamic and thermal deformity errors of a linear motion single-plane gantry stage in real time according to an embodiment of the present invention;
Fig. 4 is a view for illustrating the detailed structure of a Y-axially moving slider of a system for compensating dynamic and thermal deformity errors of a linear motion single-plane gantry stage in real time according to an embodiment of the present invention;
Fig. 5 is a block diagram for illustrating the linearity error compensation algorithm by a system for compensating dynamic and thermal deformity errors of a linear motion single-plane gantry stage in real time according to an embodiment of the present invention; and
Fig. 6 is a yaw error compensation algorithm by a system for compensating dynamic and thermal deformity errors of a linear motion single-plane gantry stage in real time according to an embodiment of the present invention.

### DETAILED DESCRIPTION

Hereinafter, preferred embodiments of the present invention are described in detail with reference to the attached drawings so that a person skilled in the art may readily carry out the present invention. However, in the detailed description of the preferred embodiments of the present invention, the functions or structures of the conventional parts are omitted from the detailed description in order to avoid unnecessary confusion of the gist of the present invention. In addition, the parts having similar functions and operations are referred to by the same reference numerals.

Besides, throughout the specification, the expression that a certain part is connected to another part means not only 'direct connection' but also 'indirect connection through another element'. Furthermore, the expression of 'including a certain part' means being able to include other parts except for a description to the contrary.

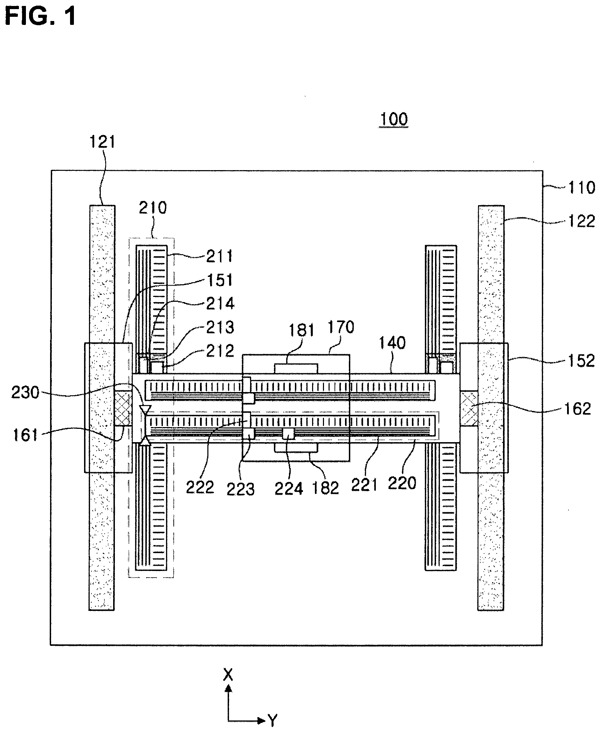

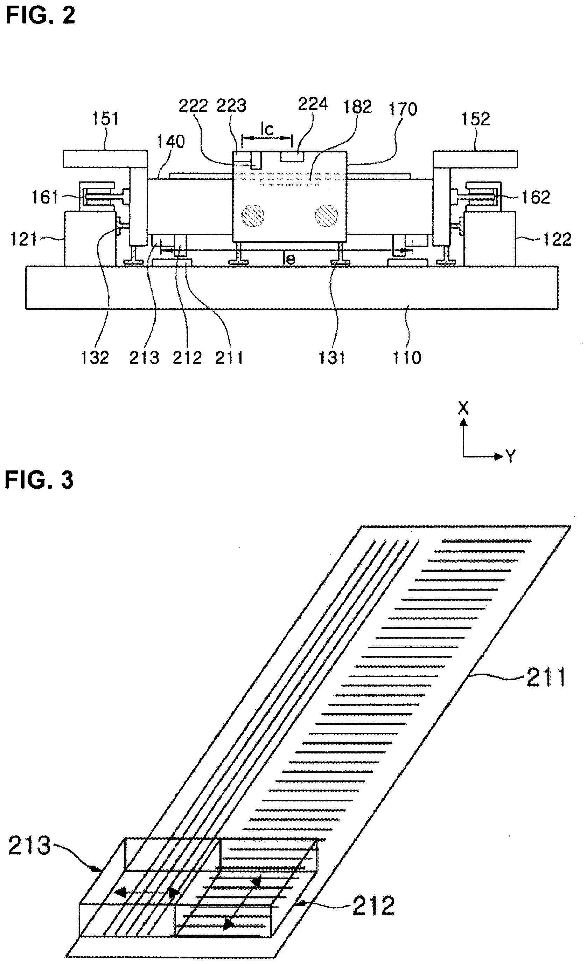

Fig. 1 is a diagrammatic view of a system for compensating dynamic and thermal deformity errors of a linear motion single-plane gantry stage in real time according to an embodiment of the present invention, and Fig. 2 a front view of a system for compensating dynamic and thermal deformity errors of a linear motion single-plane gantry stage in real time according to an embodiment of the present invention.

Referring to Figs. 1 and 2, a linear motion single-plane gantry stage 100 on which a system 200 for compensating dynamic and thermal deformity errors in real time according to an embodiment of the present invention is mounted includes a base 110 and two linear edge beams 121, 122 respectively positioned in both sides of the top of the base 110, which support a plurality of vertical air bearings 131 and a plurality of horizontal air bearings 132 for supporting an X-axially and Y-axially moving assembly. In this case, the position of the vertical air bearings 131 and the horizontal air bearings 132 can be determined based both on the cost function for improving the control bandwidth and on the view of mechanical design for improving the intrinsic frequency of the system.

The X-axial motion is performed by an X-axially moving gantry beam 140. The X-axially moving gantry beam 140 is held by two moving carriages 151, 152 supported by a plurality of the vertical air bearings 131 and a plurality of the horizontal air bearings 132, and the two moving carriages 151, 152 are X-axially driven by two drive motors 161, 162. In this case, one (hereinafter, referred to as 'master shaft') of the two linear edge beams 121 and 122 has a greater stiffness than the other (hereinafter, referred to as 'slave shaft'). In other words, the moving carriage 151 of the master shaft is firmly mounted by means of the vertical and the horizontal air spring 131 and 132.

The Y-axial motion is performed by an Y-axially moving slider 170 moving along the X-axially moving gantry beam 140, and the Y-axially moving slider 170 is Y-axially driven by two drive motors 181, 182.

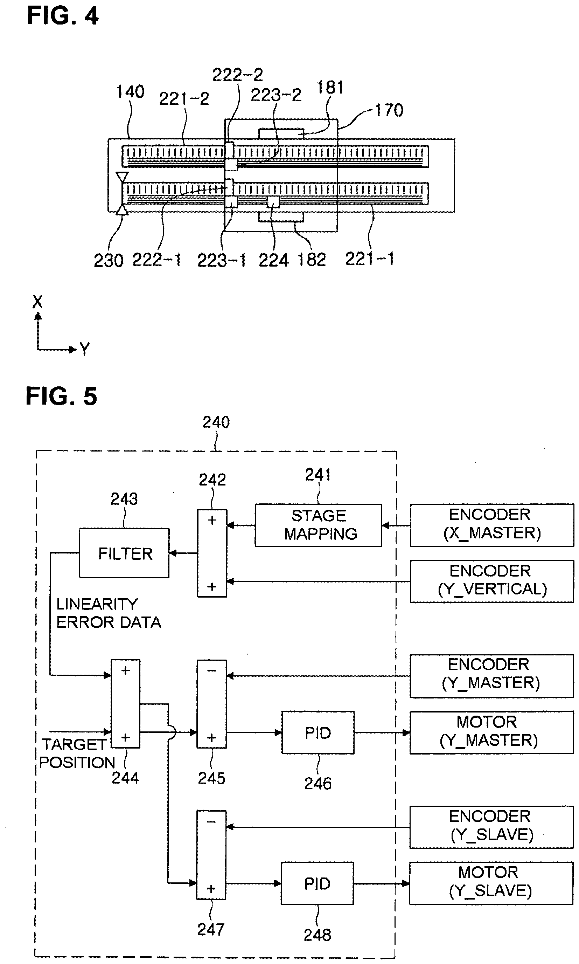

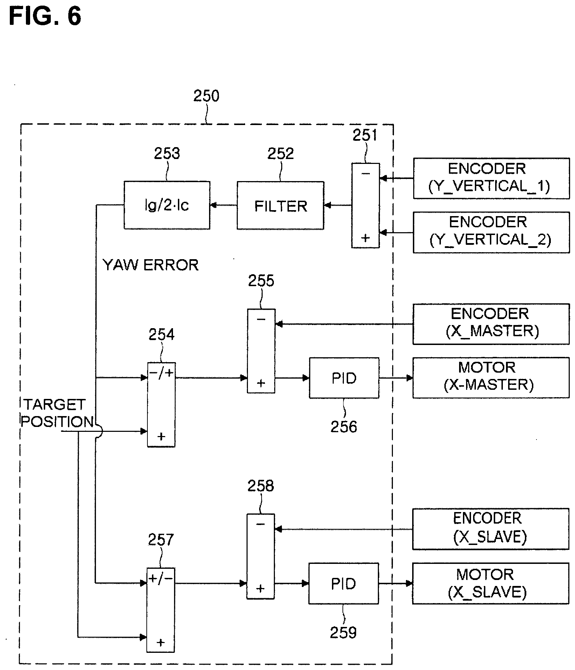

The system 200 for compensating dynamic and thermal deformity errors in real time which is mounted on the linear motion single-plane gantry stage 100 includes a two-dimensional position measuring unit 210 for providing an X-axial feedback, a two-dimensional position measuring unit 220 for providing an Y-axial feedback, a thermal fixing point 230, and a compensation control unit (refer to Figs. 5 and 6).

The two-dimensional position measuring unit 210 for providing an X-axial feedback is provided to each of the two linear edge beams 121, 122 so as to measure an X-axial motion, and includes a two-dimensional encoder scale 211, a motional direction encoder head 212, a vertical direction encoder head 213, and an encoder mounting block 214.

The two-dimensional encoder scale 211 is mounted on the base 110 at both ends of the X-axially moving gantry beam 140 to measure an X-axial motion, and as described below with reference to Fig. 3, includes a two-dimensional grid to make a measurement both in the motional direction and in the vertical direction.

The motional direction encoder head 212 and the vertical direction encoder head 213 are to measure respectively the displacement in the motional direction and in the vertical direction from the two-dimensional grid of the two-dimensional encoder scale 211.

The encoder mounting block 214 is to mount the motional direction encoder head 212 and the vertical direction encoder head 213 on the X-axially moving gantry beam 140.

The two-dimensional position measuring unit 220 for a Y-axial feedback is to measure a Y-axial motion of the Y-axially moving slider 170, and includes a two-dimensional encoder scale 221, a motional direction encoder head 222, a vertical direction encoder head 223, and an additional vertical direction encoder head 224 for measuring a yaw error.

The two-dimensional encoder scale 221 is mounted on each of both sides of the X-axially moving gantry beam 140 to measure a Y-axial motion, and as described below with reference to Fig. 3, includes a two-dimensional grid to make a measurement both in the motional direction and in the vertical direction.

The motional direction encoder head 222 and the vertical direction encoder head 223 are to measure respectively the displacement in the motional direction and in the vertical direction from the two-dimensional grid of the two-dimensional encoder scale 221.

Also an additional vertical encoder head 224 is provided to measure a yaw during Y-axially moving. A specific method of measuring a yaw by using the vertical encoder head 224 is described below with reference to Fig. 4. And a measured yaw error may be compensated by using two servo shafts including the drive motors 161, 162 and the two motional encoder heads 212.

The thermal fixing point 230 is provided as a thermal reference for a thermal expansion of the X-axially moving gantry beam 140, fixedly positioned at one end of the two-dimensional encoder scale 221 included in the two-dimensional position measuring unit 220 for a Y-axial feedback and immediately above the vertical direction encoder head 213 included in the two-dimensional position measuring unit 210 for an X-axial feedback. Accordingly, only at the one end of the two-dimensional encoder scale 221 is provided a thermal offset readily measured by the single vertical direction encoder head 213. In addition, the two-dimensional encoder scale 221 may be made of a material with a low CTE (Coefficient of Thermal Expansion) such as Zerodur, thus keeping a high accuracy even under a great thermal change throughout the processing region.

The measured value by the vertical direction encoder head 213 of the two-dimensional position measuring unit 210 for an X-axial feedback is used to provide in real time a signal for compensating both a dynamic linearity error generated upon X-axially driving toward the Y-axially moving slider 170 driven by two servo shafts including drive motors 181, 182 and the two motional direction encoder heads 222 and a thermal offset error generated according to a temperature change.

Fig. 3 shows the structure of the two-dimensional position measuring unit provided in a system for compensating dynamic and thermal deformity errors of a linear motion single-plane gantry stage in real time according to an embodiment of the present invention.

As shown in Fig. 3, the two-dimensional encoder scale 211 includes a two-dimensional grid for making a measurement both in the motional direction and in the vertical direction. And in the two-dimensional encoder scale 211, the motional encoder head 212 is arranged on the motional direction measurement grid part, and the vertical direction encoder head 213 on the vertical direction measurement grid part.

The motional direction encoder head 212 and the vertical direction encoder head 213 measure accuracy and linearity respectively according to the motional direction and the vertical direction to provide the result to the compensation control unit for a feedback.

Fig. 4 shows in detail the structure of the Y-axially moving slider in a system for compensating dynamic and thermal deformity errors of a linear motion single-plane gantry stage in real time according to an embodiment of the present invention.

Referring to Fig. 4, two two-dimensional encoder scales 221-1, 221-2 may be mounted on both sides of the X-axially moving gantry beam 140.

One two-dimensional encoder scale 221-1 includes a motional direction encoder head 222-1, a vertical direction encoder head 223-1, and an additional vertical direction encoder head 224, while the other two-dimensional encoder scale 221-2 includes a motional direction encoder head 222-2, and a vertical direction encoder head 223-2.

In this case, a yaw error of the Y-axially moving slider may be measured based on the relative distance between the vertical direction encoder head 223-1 and the additional vertical direction encoder head 224.

Fig. 5 illustrates the linearity error compensation algorithm by a system for compensating dynamic and thermal deformity errors of a linear motion single-plane gantry stage in real time according to an embodiment of the present invention.

Referring to Fig. 5, the control unit 240 of the system 200 for compensating dynamic and thermal deformity errors in real time performs a stage mapping 241 by receiving a signal from the motional direction encoder head of the X-axial master shaft, and adds the result to a signal (namely, measured linearity error) received from the vertical direction encoder head of the X-axial master shaft in step 242.

Then, the output signal of step 242 is filtered through step 243, updating the control loop of the Y-axial master and slave shaft as a reference signal for a linearity error. In this case, the filtering of the output signal from step 242 is made by using a low pass filter so as to eliminate high frequency noise component, thus producing a low frequency linearity error signal. And the filter parameter can be optimized considering the reaction force of the moving slider, the stage dynamic response, and the control bandwidth of the moving slider during the dynamic compensation process.

Thereafter, the control loop of the Y-axial master and the slave shaft subtracts respectively the signal received from the motional direction encoder head of the Y-axial master shaft and the signal received from the motional direction encoder head of the Y-axial slave shaft from the value obtained by adding the target position signal 244 and the reference signal for the linearity error in steps 245, 247 so as to generate respective control signals delivered through respective PID (Proportional-Integrate-Derivative) controllers 246, 247 to the drive motors for the Y-axial master shaft and the Y-axial slave shaft.

Although the linearity error compensation algorithm is described with reference to Fig. 5, the thermal deformity error compensation may also performed in the same manner as the linearity error compensation algorithm.

Fig. 6 illustrates a yaw error compensation algorithm by a system for compensating dynamic and thermal deformity errors of a linear motion single-plane gantry stage in real time according to an embodiment of the present invention.

Referring to Fig. 6, the control unit 250 of the system 200 for compensating dynamic and thermal deformity errors in real time calculates the difference between the signal received from the vertical direction encoder head of the Y-axial master shaft and the signal received from the additional vertical direction encoder head in step 251.

Then, the resulting output signal is filtered through step 252. In this case, the filtering of the output signal is made by using a low pass filter so as to eliminate the high frequency noise component owing to the motions of the moving slider, thus producing a low frequency yaw error signal. And the filter parameter can be optimized considering the reaction force of the gantry beam, the stage dynamic response, and the control bandwidth of the gantry beam during the desired scan motion and the dynamic compensation process.

Thereafter, the filtered result is scaled using a factor lg/(2 • lc) in step 253. In this case, lc is the distance between the vertical direction encoder head of the Y-axial master shaft and the additional vertical direction encoder head, and Ig the distance between the vertical direction encoder head of the X-axial master shaft and the vertical encoder head of the slave shaft (refer to Fig. 2).

Then, the output signal of step 253 updates the control loop of the X-axial master and the slave shaft as a reference signal for a yaw error.

Thereafter, the control loop of the X-axial master and the slave shaft subtracts respectively the signal received from the motional direction encoder head of the X-axial master shaft and the signal received from the motional direction encoder head of the X-axial slave shaft in steps 255, 258 from the value obtained respectively by adding and subtracting the reference signal for the yaw error to and from the target position signal (or vice versa) in steps 254, 257 so as to generate respective control signals delivered through respective PID (Proportional-Integrate-Derivative) controllers 256, 259 to the drive motors for the X-axial master shaft and the X-axial slave shaft.

The linear motion single-plane gantry stage using the above-described system for compensating dynamic and thermal deformity errors may be used in all apparatuses for manufacturing, measuring, or inspecting a semiconductor, LCD, LED, OLED, AMOLED, PCB, solar cell, CNT, ceramic material, chemical material, textile material, bio material, etc. In this case, the apparatuses for manufacturing, measuring, or inspecting those are well-known to a person skilled in the art, and therefore detailed description thereof is omitted.

The present invention is not limited by the preceding embodiments and attached drawings. A person skilled in the art may substitute, modify, and alter constituent elements without departing from the technical concept of the present invention defined by the appended claims.

### DESCRIPTION OF REFERENCE NUMERALS

- 100: Linear Motion Single-Plane Gantry Stage
- 110: Base
- 121, 122: Linear Edge Beam
- 131: Vertical Air Bearing
- 132: Horizontal Air Bearing
- 140: X-axially Moving Gantry Beam
- 151, 152: Moving Carriage
- 161, 162: Drive Motor
- 170: Y-axially Moving Slider
- 181, 182: Drive Motor
- 200: System for Compensating Dynamic and Thermal Deformity Errors in Real Time
- 210: Two-Dimensional Position Measuring Unit for X-axial Feedback
- 211: Two-Dimensional Encoder Scale
- 212: Motional Direction Encoder Head
- 213: Vertical Direction Encoder Head
- 214: Encoder Mounting Block
- 220: Two-Dimensional Position Measuring Unit for Y-axial Feedback
- 221: Two-Dimensional Encoder Scale
- 222: Motional Direction Encoder Head
- 223, 224: Vertical Direction Encoder Head
- 230: Thermal Fixing Point

## Claims

1. A system for compensating dynamic and thermal deformity errors of a linear motion single-plane gantry stage (100) in real time, including:
said linear motion single-plane gantry stage (100) comprising two linear edge beams (121, 122) respectively positioned in both sides of said linear motion single-plane gantry stage (100), an X-axially moving gantry beam (140) moving on said two linear edge beams (121, 122), and an Y-axially moving slider (170) moving on said X-axially moving gantry beam (140),
two first two-dimensional position measuring units (210) arranged in each of said two linear edge beams (121, 122) respectively for measuring the position of said X-axially moving gantry beam (140) to provide a feedback of an X-axial motion thereof;
a second two-dimensional position measuring unit (220) arranged on said X-axially moving gantry beam (140) for measuring the position of said Y-axially moving slider (170) to provide a feedback of an Y-axial motion thereof;
a fixed thermal point (230) provided as a thermal reference for measuring a thermal expansion of said X-axially moving gantry beam (140); and
a compensation control unit (240, 250) for controlling an error motion of said linear motion single-plane gantry stage (100) in real time by measuring dynamic and thermal deformity errors based on the data received from said first and said second two-dimensional position measuring unit (210, 220),
wherein said first two-dimensional position measuring unit (210) includes:
a first two-dimensional encoder scale (211) mounted on a base (110) below each of both ends of said X-axially moving gantry beam (140) including a two-dimensional grid for measuring both in the motional direction (X) and in the vertical direction (Y);
a first motional direction encoder head (212) arranged on a motional direction measurement grid part of said first two-dimensional encoder scale (211) for measuring a motional direction displacement;
a first vertical direction encoder head (213) arranged on a vertical direction measurement grid part of said first two-dimensional encoder scale (211) for measuring a vertical direction displacement; and
an encoder mounting block (214) for mounting said motional direction encoder head (212) and said vertical direction encoder head (213) on said X-axially moving gantry beam (140),
wherein the second two-dimensional position measuring unit (220) includes:
a second two-dimensional encoder scale (221) mounted on each of both sides of said X-axially moving gantry beam (140) in the Y-axial motional direction including a two-dimensional grid for making measurement both in the motional direction (X) and in the vertical direction (Y);
a second motional encoder head (222) arranged on a motional direction measurement grid part of said second two-dimensional encoder scale (221) for measuring a motional direction displacement; and
a second vertical direction encoder head (223) arranged on a vertical direction measurement grid part of said second two-dimensional encoder scale (221),
wherein said compensation control unit (240, 250) is adapted to perform a stage mapping for a signal received from said first motional direction encoder head (212) so as to generate a resulting signal added to a signal received from said first vertical direction encoder head (213), and filters the added result so as to generate a filtered result for updating an Y-axial control loop as a reference signal for a linearity error.

2. The system for compensating dynamic and thermal deformity errors of a linear motion single-plane gantry stage (100) in real time according to Claim 1, wherein said second two-dimensional position measuring unit (220) further includes a third vertical direction encoder head (224) separated from said second vertical direction encoder head (223), said third vertical direction encoder head (224) being arranged on the vertical direction measurement grid part of said second two-dimensional encoder scale (221) for measuring a vertical direction displacement.

3. The system for compensating dynamic and thermal deformity errors of a linear motion single-plane gantry stage (100) in real time according to Claim 1, wherein a yaw error of said Y-axially moving slider (170) is measured based on the relative distance between said second vertical direction encoder head (223) and said third vertical direction encoder head (224) arranged on said second two-dimensional encoder scale (221) mounted on one side of said X-axially moving gantry beam (140) in the Y-axial motional direction.

4. The system for compensating dynamic and thermal deformity errors of a linear motion single-plane gantry stage (100) in real time according to Claim 1, wherein the filtering is performed by a low pass filter so as to eliminate high frequency noise component, thus producing only a low frequency linearity error signal.

5. The system for compensating dynamic and thermal deformity errors of a linear motion single-plane gantry stage (100) in real time according to Claim 2, wherein said compensation control unit (240, 250) calculates the difference between the signal received from the second vertical direction encoder head (223) and the signal received from the third vertical direction encoder head (224) and filters the difference so as to generate the filtered result scaled by using a factor lg/(2 • lc) to update an X-axial control loop as a reference signal for a yaw error, said second and third vertical direction encoder heads (223, 224) being arranged on said second two-dimensional encoder scale (221) mounted on one side of said X-axially moving gantry beam (140) in the Y-axial motional direction;
said Ic being the distance between the second vertical direction encoder head (223) and the third vertical direction encoder head (224) arranged on said second two-dimensional encoder scale (221) mounted on one side of said X-axially moving gantry beam (140) in the Y-axial motional direction; and
said Ig being the distance between said first vertical direction encoder heads (213) respectively arranged on said first two-dimensional encoder scale (211) respectively mounted on the base (110) below both ends of said X-axially moving gantry beam (140).

6. The system for compensating dynamic and thermal deformity errors of a linear motion single-plane gantry stage (100) in real time according to Claim 5, wherein the filtering is performed by a low pass filter so as to eliminate high frequency noise component, thus producing only a low frequency yaw error signal.

7. A stage apparatus comprising a system for compensating dynamic and thermal deformity errors of a linear motion single-plane gantry stage (100) in real time according to Claims 1 to 6.

## Patentansprüche

1. System zum Kompensieren dynamischer und thermischer Verformungsfehler einer linear verfahrbaren Ein-Ebenen-Portalbühne (100) in Echtzeit, aufweisend:
die linear verfahrbare Ein-Ebenen-Portalbühne (100), die zwei lineare Randträger (121, 122) umfasst, welche jeweils an den beiden Seiten der linear verfahrbaren Ein-Ebenen-Portalbühne (100) angeordnet sind, einen in der X-Achse verfahrbaren Portalbalken (140), der auf den beiden linearen Randträgern (121, 122) läuft, und einen in der Y-Achse verfahrbaren Gleiter (170), der auf dem in der X-Achse verfahrbaren Portalbalken (140) läuft,
zwei erste Zwei-Dimensionen-Positionsbestimmungseinheiten (210), die jeweils in jedem der beiden linearen Randträger (121, 122) angeordnet sind, um die Position des in der X-Achse verfahrbaren Portalbalkens (140) zu bestimmen, um eine Rückmeldung zur X-Achsen-Verfahrung desselben zu geben; eine zweite Zwei-Dimensionen-Positionsbestimmungseinheit (220), die auf dem in der X-Achse verfahrbaren Portalbalken (140) angeordnet ist, zum Bestimmen der Position des in der Y-Achse verfahrbaren Gleiters (170), um eine Rückmeldung zur Y-Achsen-Verfahrung desselben zu geben;
einen festen Wärmepunkt (230), der als Wärmebezugswert zum Messen einer Wärmeausdehnung des in der X-Achse verfahrbaren Portalbalkens (140) bereitgestellt wird; und
eine Kompensationssteuereinheit (240, 250) zum Steuern einer fehlerhaften Verfahrung der linear verfahrbaren Ein-Ebenen-Portalbühne (100) in Echtzeit durch Messen dynamischer und thermischer Verformungsfehler basierend auf den Daten, die von der ersten und der zweiten Zwei-Dimensionen-Positionsbestimmungseinheit (210, 220) empfangen werden,
wobei die erste Zwei-Dimensionen-Positionsbestimmungseinheit (210) aufweist:
eine erste zweidimensionale Codierskala (211), die auf einer Basis (110) unterhalb jedes der beiden Enden des in der X-Achse verfahrbaren Portalbalkens (140) angebracht ist, ein zweidimensionales Raster zum Messen sowohl in der Verfahrrichtung (X) als auch in der vertikalen Richtung (Y) aufweisend;
einen ersten Verfahrrichtungs-Codiererkopf (212), der an einem Verfahrrichtungs-Messrasterteil der ersten zweidimensionalen Codierskala (211) angeordnet ist, zum Messen eines Versatzes in der Verfahrrichtung;
einen ersten vertikalen Richtungs-Codiererkopf (213), der an einem vertikalen Richtungs-Messrasterteil der ersten zweidimensionalen Codierskala (211) angeordnet ist, zum Messen eines Versatzes in vertikaler Richtung; einen Codierermontageblock (214) zum Montieren des Verfahrrichtungs-Codiererkopfes (212) und des vertikalen Richtungs-Codiererkopfes (213) an dem in der X-Achse verfahrbaren Portalbalken (140),
wobei die zweite Zwei-Dimensionen-Positionsbestimmungseinheit (220) aufweist:
eine zweite zweidimensionale Codierskala (221), die an jeder der beiden Seiten des in der X-Achse verfahrbaren Portalbalkens (140) in der Verfahrrichtung entlang der Y-Achse angebracht ist, ein zweidimensionales Raster zum Messen sowohl in der Verfahrrichtung (X) als auch in der vertikalen Richtung (Y) aufweisend;
einen zweiten Verfahr-Codiererkopf (222), der an einem Verfahrrichtungs-Messrasterteil der zweiten zweidimensionalen Codierskala (221) angeordnet ist, zum Messen eines Versatzes in der Verfahrrichtung; und einen zweiten vertikalen Richtungs-Codiererkopf (223), der an einem vertikalen Richtungs-Messrasterteil der zweiten zweidimensionalen Codierskala (221) angeordnet ist,
wobei die Kompensationssteuereinheit (240, 250) dafür ausgelegt ist, eine Bühnenzuordnung für ein vom ersten Verfahrrichtungs-Codiererkopf (212) empfangenes Signal durchzuführen, um ein resultierendes Signal zu erzeugen, das einem vom ersten vertikalen Richtungs-Codiererkopf (213) empfangenen Signal hinzugefügt wird, und das addierte Ergebnis filtert, um ein gefiltertes Ergebnis zum Aktualisieren einer Y-Achsen-Steuerschleife als Referenzsignal für einen Linearitätsfehler zu erzeugen.

2. System zum Kompensieren dynamischer und thermischer Verformungsfehler einer linear verfahrbaren Ein-Ebenen-Portalbühne (100) in Echtzeit gemäß Anspruch 1, wobei die zweite Zwei-Dimensionen-Positionsbestimmungseinheit (220) ferner einen dritten vertikalen Richtungs-Codiererkopf (224) aufweist, der von dem zweiten vertikalen Richtungs-Codiererkopf (223) getrennt ist, wobei der dritte vertikale Richtungs-Codiererkopf (224) an dem vertikalen Richtungs-Messrasterteil der zweiten zweidimensionalen Codierskala (221) angeordnet ist, zum Messen eines Versatzes in vertikaler Richtung.

3. System zum Kompensieren dynamischer und thermischer Verformungsfehler einer linear verfahrbaren Ein-Ebenen-Portalbühne (100) in Echtzeit gemäß Anspruch 1, wobei ein Gierfehler des in der Y-Achse verfahrbaren Gleiters (170) gemessen wird, basierend auf dem relativen Abstand zwischen dem zweiten vertikalen Richtungs-Codiererkopf (223) und dem dritten vertikalen Richtungs-Codiererkopf (224), der an der zweiten zweidimensionalen Codierskala (221) angeordnet ist, welche an einer Seite des in der X-Achse verfahrbaren Portalbalkens (140) in der Verfahrrichtung entlang der Y-Achse angebracht ist.

4. System zum Kompensieren dynamischer und thermischer Verformungsfehler einer linear verfahrbaren Ein-Ebenen-Portalbühne (100) in Echtzeit gemäß Anspruch 1, wobei die Filterung von einem Tiefpassfilter durchgeführt wird, um hochfrequente Rauschkomponenten zu entfernen und so lediglich ein niederfrequentes Linearitätsfehlersignal zu erzeugen.

5. System zum Kompensieren dynamischer und thermischer Verformungsfehler einer linear verfahrbaren Ein-Ebenen-Portalbühne (100) in Echtzeit.gemäß Anspruch 2, wobei die Kompensationssteuereinheit (240, 250) die Differenz zwischen dem vom zweiten vertikalen Richtungs-Codiererkopf (223) empfangenen Signal und dem vom dritten vertikalen Richtungs-Codiererkopf (224) empfangenen Signal berechnet und die Differenz filtert, um das gefilterte Ergebnis zu erzeugen, skaliert mit einem Faktor lg/(2•lc), um eine X-Achsen-Steuerschleife als Referenzsignal für einen Gierfehler zu aktualisieren, wobei der zweite und der dritte vertikale Richtungs-Codiererkopf (223, 224) auf der zweiten zweidimensionalen Codierskala (221) angeordnet sind, welche an einer Seite des in der X-Achse verfahrbaren Portalbalkens (140) in der Verfahrrichtung entlang der Y-Achse angebracht ist;
wobei lc der Abstand zwischen dem zweiten vertikalen Richtungs-Codiererkopf (223) und dem dritten vertikalen Richtungs-Codiererkopf (224) ist, die auf der zweiten zweidimensionalen Codierskala (221) angeordnet sind, welche an einer Seite des in der X-Achse verfahrbaren Portalbalkens (140) in der Verfahrrichtung entlang der Y-Achse angebracht ist; und
wobei lg der Abstand zwischen den ersten vertikalen Richtungs-Codiererköpfen (213) ist, die jeweils an der ersten zweidimensionalen Codierskala (211) angeordnet sind, welche jeweils unterhalb der beiden Enden des in der X-Achse verfahrbaren Portalbalkens (140) auf der Basis (110) angebracht ist.

6. System zum Kompensieren dynamischer und thermischer Verformungsfehler einer linear verfahrbaren Ein-Ebenen-Portalbühne (100) in Echtzeit gemäß Anspruch 5, wobei die Filterung von einem Tiefpassfilter durchgeführt wird, um hochfrequente Rauschkomponenten zu entfernen und so lediglich ein niederfrequentes Gierfehlersignal zu erzeugen.

7. Bühnenvorrichtung, umfassend ein System zum Kompensieren dynamischer und thermischer Verformungsfehler einer linear verfahrbaren Ein-Ebenen-Portalbühne (100) in Echtzeit gemäß Anspruch 1 bis 6.

## Revendications

1. Système de compensation en temps réel des erreurs de déformation dynamique et thermique d'un étage de portique (100) à plan unique et mouvement linéaire, incluant :
ledit étage de portique (100) à plan unique et mouvement linéaire comprenant deux poutres de rive (121, 122) linéaires positionnées respectivement des deux côtés dudit étage de portique (100) à plan unique et mouvement linéaire, une poutre de portique (140) mobile axialement sur l'axe X se déplaçant sur lesdites deux poutres de rive (121, 122) linéaires et une glissière (170) mobile axialement sur l'axe Y se déplaçant sur ladite poutre de portique (140) mobile axialement sur l'axe X,
deux premières unités de mesure de position sur deux dimensions (210) agencées respectivement dans chacune desdites deux poutres de rive (121, 122) linéaires pour mesurer la position de ladite poutre de portique (140) mobile axialement sur l'axe X afin de fournir une information de retour de son mouvement axial sur l'axe X,
une seconde unité de mesure de position sur deux dimensions (220) agencée sur ladite poutre de portique (140) mobile axialement sur l'axe X pour mesurer la position de ladite glissière (170) mobile axialement sur l'axe Y afin de fournir une information de retour de son mouvement axial sur l'axe Y,
un point thermique fixe (230) prévu comme référence thermique pour mesurer la dilatation thermique de ladite poutre de portique (140) mobile axialement sur l'axe X, et
une unité de contrôle de compensation (240, 250) permettant de contrôler en temps réel un mouvement d'erreur dudit étage de portique (100) à plan unique et mouvement linéaire en mesurant des erreurs de déformation dynamique et thermique sur la base des données reçues desdites premières et de ladite seconde unité de mesure de position sur deux dimensions (210, 220),
dans lequel ladite première unité de mesure de position sur deux dimensions (210) inclut :
une première échelle de codage sur deux dimensions (211) montée sur une base (110) en dessous de chacune des deux extrémités de ladite poutre de portique (140) mobile axialement sur l'axe X incluant une grille sur deux dimensions permettant de mesurer à la fois dans la direction de mouvement (X) et dans la direction verticale (Y),
une première tête de codage de direction de mouvement (212) disposée sur une grille de mesure de direction de mouvement faisant partie de ladite première échelle de codage sur deux dimensions (211) permettant de mesurer un déplacement dans la direction de mouvement,
une première tête de codage de direction verticale (213) disposée sur une grille de mesure de direction verticale faisant partie de ladite première échelle de codage sur deux dimensions (211) permettant de mesurer un déplacement dans la direction verticale, et
un bloc de montage de codeurs (214) destiné à placer ladite tête de codage de direction de mouvement (212) et ladite tête de codage de direction verticale (213) sur ladite poutre de portique (140) mobile axialement sur l'axe X,
dans lequel la seconde unité de mesure de position sur deux dimensions (220) inclut :
une seconde échelle de codage sur deux dimensions (221) montée sur chacun des deux côtés de ladite poutre de portique (140) mobile axialement sur l'axe X dans la direction de mouvement axial sur l'axe Y incluant une grille sur deux dimensions permettant de réaliser une mesure à la fois dans la direction de mouvement (X) et dans la direction verticale (Y),
une seconde tête de codage de mouvement (222) disposée sur une grille de mesure de direction de mouvement faisant partie de ladite seconde échelle de codage sur deux dimensions (221) permettant de mesurer un déplacement dans la direction de mouvement, et
une deuxième tête de codage de direction verticale (223) disposée sur une grille de mesure de direction verticale faisant partie de ladite seconde échelle de codage sur deux dimensions (221),
dans lequel ladite unité de contrôle de compensation (240, 250) est conçue pour effectuer un mappage de niveau pour un signal reçu en provenance de ladite première tête de codage de direction de mouvement (212) de sorte à générer un signal résultant ajouté à un signal reçu en provenance de ladite première tête de codage de direction verticale (213), et filtrer le résultat ajouté de sorte à générer un résultat filtré permettant de mettre à jour une boucle de commande axiale sur l'axe Y en tant que signal de référence pour une erreur de linéarité.

2. Système de compensation en temps réel des erreurs de déformation dynamique et thermique d'un étage de portique (100) à plan unique et mouvement linéaire selon la revendication 1, dans lequel ladite seconde unité de mesure de position sur deux dimensions (220) inclut en outre une troisième tête de codage de direction verticale (224) séparée de ladite deuxième tête de codage de direction verticale (223), ladite troisième tête de codage de direction verticale (224) étant disposée sur la grille de mesure de direction verticale faisant partie de ladite seconde échelle de codage sur deux dimensions (221) permettant de mesurer un déplacement de direction verticale.

3. Système de compensation en temps réel des erreurs de déformation dynamique et thermique d'un étage de portique (100) à plan unique et mouvement linéaire selon la revendication 1, dans lequel une erreur de lacet de ladite glissière (170) mobile axialement sur l'axe Y est mesurée sur la base de la distance relative entre ladite deuxième tête de codage de direction verticale (223) et ladite troisième tête de codage de direction verticale (224) disposée sur ladite seconde échelle de codage sur deux dimensions (221) montée sur un côté de ladite poutre de portique (140) mobile axialement sur l'axe X dans la direction axiale sur l'axe Y.

4. Système de compensation en temps réel des erreurs de déformation dynamique et thermique d'un étage de portique (100) à plan unique et mouvement linéaire selon la revendication 1, dans lequel le filtrage est effectué grâce à un filtre passe bas de sorte à éliminer une composante de bruit haute fréquence, en ne générant ainsi qu'un signal d'erreur de linéarité basse fréquence.

5. Système de compensation en temps réel des erreurs de déformation dynamique et thermique d'un étage de portique (100) à plan unique et mouvement linéaire selon la revendication 2, dans lequel ladite unité de contrôle de compensation (240, 250) calcule la différence existant entre le signal reçu en provenance de la deuxième tête de codage de direction verticale (223) et le signal reçu en provenance de la troisième tête de codage de direction verticale (224), et elle filtre la différence de sorte à générer le résultat filtré mis à l'échelle en utilisant un facteur lg / (2 * lc) afin de mettre à jour une boucle de commande axiale sur l'axe X en tant que signal de référence pour une erreur de lacet, lesdites deuxième et troisième têtes de codage de direction verticale (223, 224) étant disposées sur ladite seconde échelle de codage sur deux dimensions (221) placée sur un côté de ladite poutre de portique (140) mobile axialement sur l'axe X dans la direction de mouvement axial sur l'axe Y,
ladite longueur lc représentant la distance existant entre la deuxième tête de codage de direction verticale (223) et la troisième tête de codage de direction verticale (224) disposées sur ladite seconde échelle de codage sur deux dimensions (221) montée sur un côté de ladite poutre de portique (140) mobile axialement sur l'axe X dans la direction axiale sur l'axe Y, et
ladite longueur lg représentant la distance existant entre lesdites premières têtes de codage de direction verticale (213) disposées respectivement sur ladite première échelle de codage sur deux dimensions (211) montée respectivement sur la base (110) en dessous des deux extrémités de ladite poutre de portique (140) mobile axialement sur l'axe X.

6. Système de compensation en temps réel des erreurs de déformation dynamique et thermique d'un étage de portique (100) à plan unique et mouvement linéaire selon la revendication 5, dans lequel le filtrage est effectué grâce à un filtre passe bas de sorte à éliminer une composante de bruit haute fréquence, en ne générant ainsi qu'un signal d'erreur de lacet basse fréquence.

7. Appareil de plateau comprenant un système de compensation en temps réel des erreurs de déformation dynamique et thermique d'un étage de portique (100) à plan unique et mouvement linéaire conforme aux revendications 1 à 6.
